(19) Europäisches Patentamt
European Patent Office
Office européen des brevets

(11) Veröffentlichungsnummer: **0 327 812 B1**

(12) # EUROPÄISCHE PATENTSCHRIFT

(45) Veröffentlichungstag der Patentschrift:
02.10.91 Patentblatt 91/40

(51) Int. Cl.⁵: **F16H 37/04, B60K 41/22**

(21) Anmeldenummer: **89100384.0**

(22) Anmeldetag: **11.01.89**

(54) **Triebwerk für Nutzfahrzeuge.**

(30) Priorität: **10.02.88 DE 3803959**

(43) Veröffentlichungstag der Anmeldung:
**16.08.89 Patentblatt 89/33**

(45) Bekanntmachung des Hinweises auf die
Patenterteilung:
**02.10.91 Patentblatt 91/40**

(84) Benannte Vertragsstaaten:
**DE FR GB IT**

(56) Entgegenhaltungen:
**DE-A- 1 967 116
DE-A- 2 410 164
GB-A- 2 063 395**

(73) Patentinhaber: **Xaver Fendt & Co.
Johann-Georg-Fendt-Strasse 4
W-8952 Marktoberdorf (DE)**

(72) Erfinder: **Reisch, Johann
Saliterstrasse 90
W-8952 Marktoberdorf (DE)**
Erfinder: **Dziuba, Peter
Hochstätterberg 33 1/15
W-8951 Lengenwang (DE)**

## Beschreibung

Die Erfindung betrifft ein Triebwerk für Nutzfahrzeuge, insbesondere für Ackerschlepper, bei dem einer Anfahr- und Schaltkupplung ein lastschaltbares Getriebe und ein synchronisiertes Schaltgetriebe im Leistungsfluß nachgeschaltet ist und das lastschaltbare Getriebe mehrere reibschlüssig wirkende, mittels Hilfskraft ein- und ausrückbare Drehmomentübertragungsmittel wie Reibungskupplungen und/oder -bremsen enthält, von denen mindestens eines für die Leistungsübertragung eingerückt ist entsprechend den Merkmalen im Oberbegriff von Anspruch 1, die aus der DE-A-1967116 bekannt sind.

Ein weiteres Triebwerk geht z.B. aus dem vom Lehrstuhl und Institut für Landmaschinen der technischen Universität München (Renius T 5-14) herausgegebenen Getriebeplan des Traktors Ford 7000 aus dem Jahre 1973 hervor. Als Anfahr- und Schaltkupplung ist hier eine trockene Reibungskupplung vorgesehen, die sich im Vergleich zu "nassen" Reibungskupplungen durch den Vorteil der grösseren Einfachheit auszeichnet und darüberhinaus restmomentfrei ausrückbar ist. Da eine Reparatur bzw. das Überholen der Anfahr-und Schaltkupplung unabhängig davon, an welcher Stelle sie im Leistungsfluß angeordnet ist, einen erheblichen Arbeitsaufwand erfordert, wird für die Anfahr- und Schaltkupplung eine möglichst hohe Lebensdauer angestrebt. Eine Erhöhung der Lebensdauer ist jedoch an eine entsprechende Vergrößerung der Reibfläche der Kupplung gebunden und geht deshalb einher mit einer starken Massenerhöhung der Anfahr- und Schaltkupplung. Übliche, in Schaltgetrieben von Fahrzeugen eingesetzte Synchronisierungseinrichtungen sind aber bei der Synchronisierung derart großer Massen überfordert, so daß das nachgeordnete Schaltgetriebe nicht mehr leicht und schnell schaltbar ist. Die Lebensdauer der Anfahr- und Schaltkupplungen ist also bisher durch die zur Verfügung stehenden Synchronisierungseinrichtungen für das Schaltgetriebe begrenzt.

Aufgabe der vorliegenden Erfindung ist es, ein Triebwerk der eingangs beschriebenen Gattung zu schaffen, bei dem die Lebensdauer der Anfahr- und Schaltkupplung der des gesamten Fahrzeuges angeglichen werden kann, ohne daß darunter die leichte Schaltbarkeit des Schaltgetriebes leidet.

Zur Lösung dieser Aufgabe dienen die im Anspruch 1 aufgeführten Merkmale.

Dadurch, daß immer dann der Leistungsfluß über das Lastschaltgetriebe unterbrochen wird, wenn zum Gangwechsel im Schaltgetriebe das Kupplungspedal der Anfahr- und Schaltkupplung betätigt ist, werden die Synchronisiereinrichtungen des Schaltgetriebes von einem großen Teil der zu synchronisierenden Massen des Lastschaltgetriebes sowie der abtriebsseitigen Hälfte der Anfahr- und Schaltkupplung entlastet. Die Synchronisierungseinrichtungen haben lediglich die Massen zwischen der Synchronisierstelle im Schaltgetriebe und der Abtriebshälfte des Lastschaltgetriebes zu synchronisieren, während die Drehzahlangleichung der abtriebsseitigen Hälfte der Anfahr- und Schaltkupplung von den Drehmomentübertragungsmitteln des Lastschaltgetriebes übernommen wird. Damit braucht bei der die Lebensdauer bestimmenden Auslegung der Anfahr- und Schaltkupplung keine Rücksicht mehr auf die Synchronisierungseinrichtungen des Schaltgetriebes genommen werden, so daß einer gewünschten Ausdehnung der Lebensdauer der Anfahr- und Schaltkupplung von dieser Seite her nichts im Wege steht.

Weitere vorteilhafte Einzelheiten und Merkmale der Erfindung gehen aus den übrigen Ansprüchen hervor.

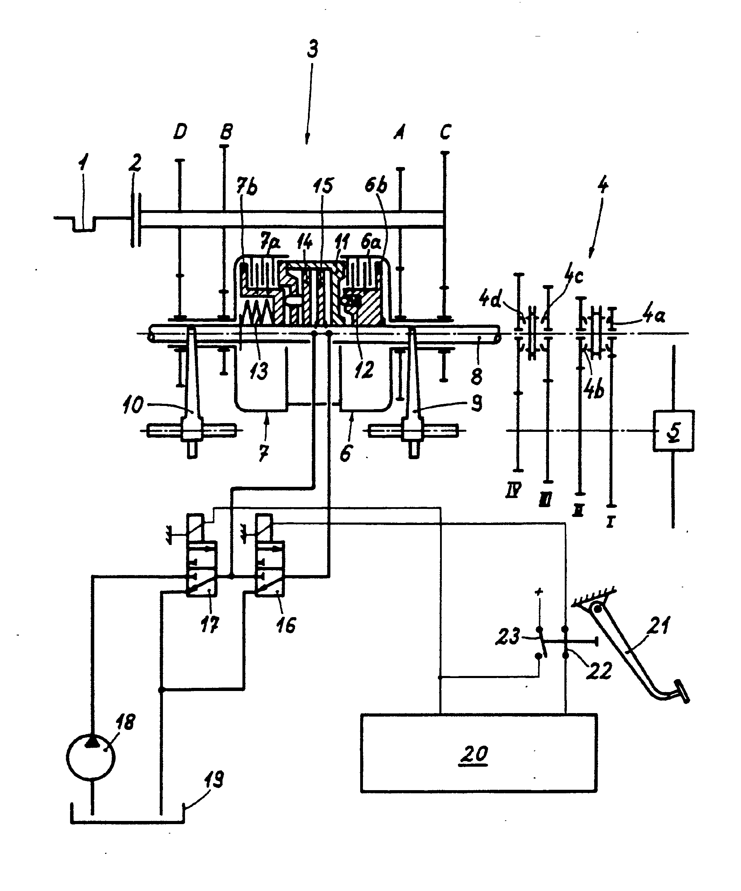

Die Erfindung wird im folgenden am Beispiel des in der Zeichnung wiedergegebenen Triebwerkes näher erläutert.

Das erfindungsgemäße Triebwerk besteht aus einem Antriebsmotor 1, einer trockenen Anfahr- und Schaltkupplung 2, einem Lastschaltgetriebe 3 in Vorgelegebauart und einem synchronisierten Schaltgetriebe 4, das seinerseits mit einem Differentialgetriebe 5 nicht gezeigter angetriebener Räder eines Fahrzeuges in Verbindung steht.

Das Lastschaltgetriebe 3 weist vier aus je 2 Zahnrädern gebildete Schaltstufen A, B, C, D auf. Die Abtriebsräder der Schaltstufen A und C bzw. der Schaltstufen B und D sind lose drehbar auf einem Hals der Antriebshälften 6a, 7a einer zwischen ihnen auf der Ausgangswelle 8 angeordneten, zwei in Lamellenbauweise ausgeführten Kupplungen 6, 7 enthaltenden Kupplungseinrichtung angeordnet. Zwischen den Abtriebsrädern der Schaltstufen A und C bzw. B und D befindet sich auf dem Hals der Antriebshälften 6a, 7a je eine damit drehfest verbundene Muffe, die mittels einer zugehörigen druckmittelzylinderbetätigten Schaltgabel 9, 10 verschiebbar ist, derart, daß auf der einen Seite entweder das Abtriebsrad der Schaltstufe A oder C und auf der anderen Seite entweder das Abtriebsrad der Schaltstufe B oder D mit der Antriebshälfte 6a, bzw. 7a drehfest verbunden ist.

Die Kupplung 6 ist bei Druckbeaufschlagung eines Kolbens 11 ein- und unter der Wirkung von Lüftfedern 12 ausrückbar. Die Kupplung 7 dagegen ist durch die Kraft von auf die Abtriebshälfte 7b wirkenden Federn 13 ein- sowie durch Druckbeaufschlagung eines Kolbens 14 ausrückbar. Der Zylinderraum zwischen den Kolben 11, 14 ist durch eine axial unverschiebbare Zwischenwand 15 unterteilt.

Die Druckbeaufschlagung der Kolben 11, 14 erfolgt mit Hilfe zweier elektrisch ansteuerbarer Schaltventile 16, 17, die in einem von einer Pumpe 18 gespeisten Hydraulikkreis des Fahrzeuges liegen. In nicht angesteuertem Zustand verbinden die Schaltventile 16, 17 die Räume vor den Kolben 11, 14 mit dem Druckmitteltank 19, so daß die Kupplung 7 unter dem Einfluß der Federn 13 eingerückt und die Kupplung 6 unter dem Einfluß der Lüftfedern 12 ausgerückt ist. In diesem Fall erfolgt der Leistungsfluß je nach Stand der Schaltgabel 10 entweder über die Schaltstufe B oder D. Die Steuermagnete der Schaltventile 16, 17 stehen elektrisch mit einem Steuergerät 20 in Verbindung, das die richtige Ansteuerung der Schaltventile 16, 17 in Abhängigkeit von der angewählten Schaltstufe A-D bewirkt. Auch die Ansteuerung der Zylinder für das Verschieben der Schaltgabeln 9, 10 erfolgt über dieses Steuergerät 20. Aufgrund des Aufbaus der Kupplungen 6,7 sind für den Fall, daß der Leistungsfluß entweder über die Schaltstufe A oder C führen soll, beide Schaltventile 16, 17 anzusteuern. In diesem Fall wird die Kupplung 7 gegen die Kraft der Federn 13 aus- und die Kupplung 6 gegen die Kraft der Lüftfedern 12 eingerückt.

Das dem Lastschaltgetriebe 3 nachgeordnete Schaltgetriebe 4 besteht aus vier synchronisierten Stufen I, II, III und IV, deren Synchronisierungseinrichtungen mit 4a, 4b, 4c und 4d bezeichnet sind.

Zum Ändern der Schaltstufe des Schaltgetriebes 4 muß bei dem beschriebenen, insoweit noch mit bekannten Ausführungen überein stimmenden Triebwerk durch Betätigen des Kupplungspedals 21 die Anfahr- und Schaltkupplung 2 ausgerückt werden. Um in einem solchen Fall die Synchronisierungseinrichtungen 4a-4d des Schaltgetriebes 4 von den Massen der Anfahr- und Schaltkupplung 2 sowie des Lastschaltgetriebes 3 zu entlasten, ist nach der Erfindung in den vom Steuergerät 20 zum Schaltventil 16 der Kupplung 6 führenden Steuerkreis ein Öffnerkontakt 22 und in einem zum Steuerkreis des Schaltventils 17 parallelen Steuerkreis ein Schließerkontakt 23 angeordnet. Beide Kontakte 22, 23 werden gleichzeitig vom Kupplungspedal 21 betätigt, wenn dieses vollständig durchgetreten ist. Unabhängig davon, über welche der Kupplungen 6, 7 des Lastschaltgetriebes 3 der Leistungsfluß verläuft, werden so bei einer Betätigung des Kupplungspedals 21 der Anfahr- und Schaltkupplung 2 das Schaltventil 16 oder 17, welches den Leistungsfluß herstellte, umgeschaltet. Waren beide Schaltventile 16, 17 unangesteuert, so erfolgt über den Schließerkontakt 23 eine Ansteuerung des Ventils 17, woraufhin die bisher unter der Kraft der Feder 13 eingerückte Schaltkupplung 7 druckmittelbetätigt ausgerückt wird. Waren dagegen beide Schaltventile 16, 17 angesteuert, so wird der Steuerkreis zu dem Schaltventil 16 über den Öffnerkontakt 22 unterbrochen, so daß das Schaltventil 16 den Zylinderraum des Kolbens 11 mit dem Tank 19 verbindet, woraufhin die bisher unter Druckmitteldruck eingerückt gewesene Schaltkupplung 6 ausgerückt wird.

Der Fahrer des Fahrzeuges kann nun wie gewünscht die Stufe des Schaltgetriebes 4 ändern, wobei die zum Einsatz kommende Synchronisierungseinrichtung 4a-4d lediglich die Ausgangswelle 8 sowie die Abtriebshälften 6b, 7b der Kupplungen 6, 7 zu beschleunigen oder zu verzögern hat. Ist die gewünschte Stufe am Schaltgetriebe 4 eingelegt, so rückt der Fahrer durch Loslassen des niedergetretenen Kupplungspedals 21 die Anfahr- und Schaltkupplung 2 wieder ein. Bereits zu Beginn dieses Vorganges werden jedoch der Öffnerkontakt 22 und der Schließerkontakt 23 freigegeben und in ihre Ausgangsstellung überführt. Damit werden die Schaltventile 16, 17 wieder vom Steuergerät 20 kontrolliert und das entgegen den Steuerbefehlen des Schaltgerätes 20 umgesteuerte Schaltventil 16, 17 nimmt wieder die Schaltstellung ein, in der es sich vor dem Niedertreten des Kupplungspedals 21 befunden hatte. Beim daraufhin erfolgenden Wiedereinrücken der zugeordneten Kupplung 6, 7 übernimmt diese den Ausgleich der aufgetretenen Relativdrehzahl zwischen der Antriebshälfte 6a, bzw. 7a und der Abtriebshälfte 6b bzw. 7b.

**Patentansprüche**

1. Triebwerk für Nutzfahrzeuge, insbesondere für Ackerschlepper, bei dem einer Anfahr- und Schaltkupplung (2) ein Lastschaltgetriebe (3) und ein synchronisiertes Schaltgetriebe (4) im Leistungsfluß nachgeschaltet ist und das Lastschaltgetriebe mehrere reibschlüssig wirkende, mittels Hilfskraft betätigbare Drehmomentübertragungsmittel wie Reibungskupplungen und/oder -bremsen enthält, von denen mindestens eines für die Leistungsübertragung eingerückt ist, wobei die Anfahr- und Schaltkupplung (2) sowie die Drehmomentübertragungsmittel des Lastschaltgetriebes betätigungsmäßig derart miteinander verknüpft sind, daß beim Ausrücken der Anfahr- und schaltkupplung (2) mittels eines Kupplungspedals (21) das eingerückte Drehmomentübertragungsmittel ausgerückt wird, **dadurch gekennzeichnet,** daß das Kupplungspedal (21) bei dessen Betätigung zum Ausrücken der Anfahr- und schaltkupplung (2) mit weiteren Schattungselementen (22, 23) derart zusammenarbeitet, daß unter Beibehaltung des Schaltzustandes der ausgerückten Drehmomentübertragungsmittel die zu diesem Zeitpunkt eingerückten Drehmomentübertragungsmittel des Lastschaltgetriebes (3) ausgerückt werden.

2. Triebwerk nach Anspruch 1, mit zwei wechselweise einrückbaren Kupplungen (6, 7) als Drehmomentübertragungsmittel und einem elektrischen Steuerkreis zur Steuerung der Hilfskraft, **dadurch gekennzeichnet,** daß die eine Kupplung (6) durch die Hilfskraft eingerückt und die andere Kupplung (7) durch die Hilfskraft ausgerückt wird, daß zur Realisierung der wechselweisen Ein- und Ausrückbarkeit der Kupplungen (6, 7) bei unbetätigtem Kupplungspedal (21) je nach eingestellter Schaltstufe (A, B, C, D) entweder beide oder keine der Kupplungen (6, 7) der Hilfskraft ausgesetzt sind, daß die Hilfskraft durch zwei je in einem elektrischen steuerkreis liegende, gesondert ansteuerbare Ventile (16, 17) erzeugt wird und daß die Schaltungselemente (22, 23) als Öffner- bzw. Schließerkontakt ausgebildet sind, wobei der Öffnerkontakt (22) im Steuerkreis zu dem Ventil (16) liegt, durch das die unter dem Einfluß der Hilfskraft einrückende Kupplung (6) mit der Hilfskraft beaufschlagt wird, wogegen der Schließerkontakt (23) bei betätigtem Kupplungspedal (21) den zum Ventil (17), durch das die unter dem Einfluß der Hilfskraft ausrückende Kupplung (7) mit der Hilfskraft beaufschlagt wird, führenden Steuerkreis zur Ansteuerung dieses Ventils (17) an Spannung legt.

3. Triebwerk nach Anspruch 2, **dadurch gekennzeichnet**, daß die Schaltungselemente (22, 23) am Pedalwegende des Kupplungspedals (21) betätigt werden.

## Claims

1. Drive mechanism for commercial vehicles, in particular for agricultural tractors, having a load gearbox (3) and a synchronised gearbox (4) in the performance flow on the output side of the start and gear clutch (2), whereby the load gearbox comprises several torque-transmission means which are friction operated and actuated by means of an auxiliary force, such as friction clutches and/or friction brakes, of which at least one is engaged for the output transmission, whereby the start and gear clutch (2) and the torque-transmission means of the load gearbox are operatively linked to one another in such a manner that during the disengagement, by means of a clutch pedal (21), of the start and gear clutch (2) the engaged torque-transmission means is disengaged, characterised in that the clutch pedal (21) when operated to disengage the start and gear clutch co-acts with further switch components (22, 23) in such a manner that, whilst maintaining the gearing state of the disengaged torque-transmission means, the, at that time, engaged torque-transmission means of the load gearbox (3) are disengaged.

2. Drive mechanism according to claim 1, with two alternately engageable clutches (6, 7) as torque-transmission means and an electrical control circuit for controlling the auxiliary force, characterised in that the one clutch (6) is engaged by the auxiliary force, and the other clutch (7) is disengaged by the auxiliary force, in that to achieve the alternate engagement and disengagement of the clutches (6, 7) with unoperated clutch pedal (21), either both or none of the clutches (6, 7) are subjected to the auxiliary force depending on the set gear stage (A, B, C, D), in that the auxiliary force is created by two separately controlled valves (16, 17) which are each positioned in an electrical control circuit, and in that the switch components (22, 23) are arranged to be opening or closing contacts, in which respect the opening contact (22) is positioned in the control circuit to the valve (16) through which the clutch (6), which engages under the influence of the auxiliary force, is loaded with the auxiliary force, whereas with the clutch pedal being operated, the closing contact (23) loads the control circuit which leads to the valve (17) through which the clutch (7), which engages under the influence of the auxiliary force, is loaded for the purpose of controlling this valve (17).

3. Drive mechanism according to claim 2, characterised in that the switch components (22, 23) are actuated at the end of the clutch pedal (21) movement.

## Revendications

1. Dispositif d'entraînement pour véhicules utilitaires, en particulier pour tracteurs agricoles, dans lequel est branché dans le circuit de puissance à la suite d'un embrayage de démarrage et de marche (2) un engrenage de commutation en charge (3) et une boîte de vitesse synchronisée (4) et dans lequel l'engrenage de commutation en charge contient plusieurs moyens de transmission du couple de rotation, comme des embrayages à friction et/ou des freins par friction, agissants par friction, actionnés par des forces auxiliaires, parmi lesquels au moins un se trouve embrayé pour assurer la transmission de la puissance, l'embrayage de démarrage et de marche (2) ainsi que les moyens de transmission du couple de rotation de l'engrenage de commutation en charge étant combinés pour agir l'un avec l'autre de façon que en débrayant l'embrayage de démarrage et de marche (2) avec une pédale d'embrayage (21), le moyen de transmission du couple de rotation embrayé se trouve alors débrayé, caractérisé en ce que la pédale d'embrayage (21) en agissant pour débrayer l'embrayage de démarrage et de marche (2) coopère avec d'autres éléments du circuit (22, 23), de façon que, en conservant l'état de commutation du moyen de transmission du couple de rotation débrayé, les moyens de transmission du couple de rotation (3) embrayés à cet instant soient débrayés.

2. Dispositif d'entraînement selon la revendication 1, comportant deux embrayages (6, 7) embrayables tour à tour comme moyens de transmission du couple de rotation et un circuit de commande électrique pour commander la force auxiliaire, caractérisé

— en ce que l'un des embrayages (6) est embrayé par la force auxiliaire et l'autre embrayage (7) est débrayé par la force auxiliaire,

— en ce que pour effectuer l'embrayage et le débrayage tour à tour des embrayages (6, 7) en agissant sur la pédale d'embrayage (21) suivant le rapport de commutation en jeu (A, B, C, D) ou bien les deux ou aucun des embrayages (6, 7) ne sont exposés à la force auxiliaire,

— en ce que la force auxiliaire est créée par deux vannes (16, 17) faisant partie d'un circuit électrique de commande, commandables séparément et

— en ce que les éléments de commutation (22, 23) sont réalisés comme contact de rupture ou contact de fermeture, le contact de rupture (22) étant situé dans le circuit de commande pour la vanne (16), par laquelle l'embrayage (6) embrayant sous l'influence de la force auxiliaire est sollicité par la force extérieure, tandis que le contact de fermeture (23) en agissant sur la pédale d'embrayage (21) met en tension le circuit de commande menant à la vanne (17) pour la commande de cette vanne (17), par laquelle l'embrayage (7) débrayant sous l'influence de la force auxiliaire se trouve sollicité par la force auxiliaire.

3. Dispositif d'entraînement selon la revendication 2, caractérisé en ce que les éléments de commutation (22, 23) sont mis en action à la fin de la course de la pédale d'embrayage (21).